(19) Europäisches Patentamt
European Patent Office
Office européen des brevets

(11) **EP 3 955 246 B1**

(12) **EUROPEAN PATENT SPECIFICATION**

(45) Date of publication and mention
of the grant of the patent:
**29.03.2023 Bulletin 2023/13**

(21) Application number: **21198758.1**

(22) Date of filing: **25.01.2019**

(51) International Patent Classification (IPC):
*G10L 17/02* (2013.01)     *G10L 17/18* (2013.01)
*G10L 25/24* (2013.01)     *G10L 25/30* (2013.01)
*G06N 3/04* (2006.01)     *G06N 3/08* (2006.01)
*G06N 20/10* (2019.01)     *G06N 7/00* (2006.01)

(52) Cooperative Patent Classification (CPC):
**G10L 17/18; G06N 3/044; G06N 3/045; G06N 3/08;
G10L 17/02; G10L 25/30;** G06N 7/01; G06N 20/10;
G10L 25/24

(54) **VOICEPRINT RECOGNITION METHOD AND DEVICE BASED ON MEMORY BOTTLENECK FEATURE**

STIMMABDRUCKSERKENNUNGSVERFAHREN UND VORRICHTUNG BASIEREND AUF SPEICHERENGPASSMERKMAL

PROCÉDÉ ET DISPOSITIF DE RECONNAISSANCE D'EMPREINTE VOCALE BASÉS SUR UNE FONCTION DE GOULOT D'ÉTRANGLEMENT DE MÉMOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2018 CN 201810146310**

(43) Date of publication of application:
**16.02.2022 Bulletin 2022/07**

(62) Document number(s) of the earlier application(s) in
accordance with Art. 76 EPC:
**19750725.4 / 3 719 798**

(73) Proprietor: **Advanced New Technologies Co., Ltd.
George Town, Grand Cayman KY1-9008 (KY)**

(72) Inventors:
• **WANG, Zhiming**
**Zhejiang, 311121 (CN)**
• **ZHOU, Jun**
**Zhejiang, 311121 (CN)**
• **LI, Xiaolong**
**Zhejiang, 311121 (CN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2017 358 306**

• **GHALEHJEGH SINA HAMIDI ET AL: "Deep
bottleneck features for i-vector based
text-independent speaker verification", 2015
IEEE WORKSHOP ON AUTOMATIC SPEECH
RECOGNITION AND UNDERSTANDING (ASRU),
IEEE, 13 December 2015 (2015-12-13), pages
555-560, XP032863595, DOI:
10.1109/ASRU.2015.7404844 [retrieved on
2016-02-10]**
• **ZEINALI HOSSEIN ET AL: "Text-dependent
speaker verification based on i-vectors, Neural
Networks and Hidden Markov Models",
COMPUTER SPEECH AND LANGUAGE,
ELSEVIER, LONDON, GB, vol. 46, 12 May 2017
(2017-05-12), pages 53-71, XP085145214, ISSN:
0885-2308, DOI: 10.1016/J.CSL.2017.04.005**

**Description**

**TECHNICAL FIELD**

One or more implementations of the present specification relate to the field of computer technologies, and in particular, to voiceprint recognition.

**BACKGROUND**

Voiceprints are acoustic features extracted based on spectral features of sound waves of a speaker. As with fingerprints, voiceprints, as a biological feature, can reflect the speech features and identity information of the speaker. Voiceprint recognition, also known as speaker recognition, is a biometric authentication technology that automatically recognizes the identity of a speaker using specific speaker information included in a speech signal. The biometric authentication technology has wide application prospects in many fields and scenarios such as identity authentication and security check.

An identity vector (i-vector) model is a common model in a voiceprint recognition system. The i-vector model considers that the speaker and the channel information in the speech are included in a low-dimensional linear subspace, and each speech can be represented by a vector of a fixed length in the low-dimensional space, where the vector is the identity vector (i-vector). The i-vector can provide solid distinguishability, includes the identity feature information of the speaker, and is an important feature for voiceprint recognition and speech recognition. I-vector-based voiceprint recognition generally includes the following steps: calculating acoustic statistics based on spectral features, extracting an identity vector (i-vector) from the acoustic statistics, and then performing speaker recognition based on the i-vector. Therefore, extraction of the i-vector is very important. However, the extraction of the i-vector in the existing voiceprint recognition process is not comprehensive. Therefore, there is a need for a more efficient solution for obtaining more comprehensive voiceprint features, to improve the accuracy of voiceprint recognition.

US 2017/0358306 A1 discloses an approach for extracting voiceprint information based on neural network. A phonetic acoustic feature is extracted from an input voice segment and input into a voiceprint model trained based on a neural network. A bottleneck feature of the neural network is extracted in the voiceprint model and frame vectors of the bottleneck feature of the neural network are mapped into a single-frame voiceprint expression vector, which serves as voiceprint information corresponding to the input voice segment.

Sina Hamidi Ghalehjegh: "Deep bottleneck features for i-vector based text-independent speaker verification", IEEE Workshop on Automatic Speech Recognition and Understanding, 2015, describes the application of deep neural networks (DNNs), trained to discriminate among speakers. Activations from the bottleneck layer of these DNNs are used as features in an i-vector based speaker verification system.

**SUMMARY**

The invention is defined by a method, a computer readable storage medium, and a computing device according to the independent claims. Preferred embodiments are defined in the dependent claims.

One or more implementations of the present specification describe a method and device capable of obtaining more comprehensive acoustic features from speaker audio, thereby making the extraction of identity authentication vectors more comprehensive and improving the accuracy of voiceprint recognition.

According to a first aspect, a voiceprint recognition method is provided, including: extracting a first spectral feature from speaker audio; inputting the speaker audio to a memory deep neural network (DNN), and extracting a bottleneck feature from a bottleneck layer of the memory DNN, the memory DNN including at least one temporal recurrent layer and the bottleneck layer, an output of the at least one temporal recurrent layer being connected to the bottleneck layer, and the number of dimensions of the bottleneck layer being less than the number of dimensions of any other hidden layer in the memory DNN; forming an acoustic feature of the speaker audio based on the first spectral feature and the bottleneck feature; extracting an identity authentication vector corresponding to the speaker audio based on the acoustic feature; and performing speaker recognition by using a classification model and based on the identity authentication vector.

In an implementation, the first spectral feature includes a Mel frequency cepstral coefficient (MFCC) feature, and a first order difference feature and a second order difference feature of the MFCC feature.

In a possible design, the at least one temporal recurrent layer includes a hidden layer based on a long-short term memory (LSTM) model, or a hidden layer based on an LSTMP model, where the LSTMP model is an LSTM model with a recurrent projection layer.

According to the invention, the at least one temporal recurrent layer includes a hidden layer based on a feedforward sequence memory FSMN model, or a hidden layer based on a cFSMN model, the cFSMN model being a compact FSMN model.

According to an implementation, inputting the speaker audio to a memory deep neural network (DNN) includes: extracting a second spectral feature from a plurality of consecutive speech frames of the speaker audio, and inputting the second spectral feature to the memory DNN.

Further, in an example, the second spectral feature is a Mel scale filter bank (FBank) feature.

According to an implementation, the forming an acoustic feature of the speaker audio includes: concatenating the first spectral feature and the bottleneck feature to form the acoustic feature.

According to a second aspect, a voiceprint recognition device is provided, including: a first extraction unit, configured to extract a first spectral feature from speaker audio; a second extraction unit, configured to: input the speaker audio to a memory deep neural network (DNN), and extract a bottleneck feature from a bottleneck layer of the memory DNN, the memory DNN including at least one temporal recurrent layer and the bottleneck layer, an output of the at least one temporal recurrent layer being connected to the bottleneck layer, and the number of dimensions of the bottleneck layer being less than the number of dimensions of any other hidden layer in the memory DNN; a feature concatenation unit, configured to form an acoustic feature of the speaker audio based on the first spectral feature and the bottleneck feature; a vector extraction unit, configured to extract an identity authentication vector corresponding to the speaker audio based on the acoustic feature; and a classification recognition unit, configured to perform speaker recognition by using a classification model and based on the identity authentication vector.

According to a third aspect, a computer readable storage medium is provided, where the medium stores a computer program, and when the computer program is executed on a computer, the computer is enabled to perform the method according to the first aspect.

According to a fourth aspect, a computing device is provided, including a memory and a processor, where the memory stores executable code, and when the processor executes the executable code, the method of the first aspect is implemented.

According to the method and device provided in the present specification, a deep neural network (DNN) with a memory function is designed, and a bottleneck feature with a memory effect is extracted from a bottleneck layer of such a deep neural network and included in the acoustic features. Such acoustic features better reflect timing-dependent prosodic features of the speaker. The identity authentication vector (i-vector) extracted based on such acoustic features can better represent the speaker's speech traits, in particular prosodic features, so that the accuracy of speaker recognition is improved.

**BRIEF DESCRIPTION OF DRAWINGS**

To describe the technical solutions in the implementations of the present invention more clearly, the following is a brief introduction of the accompanying drawings used for describing the implementations. Clearly, the accompanying drawings in the following description are merely some implementations of the present invention, and a person of ordinary skill in the field can derive other drawings from these accompanying drawings without making innovative efforts.

FIG. 1 is a schematic diagram illustrating an application scenario of an implementation disclosed in the present specification;

FIG. 2 is a flowchart illustrating a voiceprint recognition method, according to an implementation;

FIG. 3 is a schematic diagram illustrating a bottleneck layer of a deep neural network;

FIG. 4 is a schematic structural diagram illustrating a memory DNN, according to an implementation;

FIG. 5 is a schematic structural diagram illustrating a memory DNN, according to another implementation;

FIG. 6 illustrates a comparison between an LSTM and an LSTMP;

FIG. 7 is a schematic structural diagram illustrating a memory DNN, according to another implementation;

FIG. 8 is a schematic structural diagram illustrating a memory DNN, according to an implementation;

FIG. 9 is a schematic structural diagram illustrating a memory DNN, according to another implementation; and

FIG. 10 is a schematic block diagram illustrating a voiceprint recognition device, according to an implementation.

**DESCRIPTION OF IMPLEMENTATIONS**

The solutions provided in the present specification are described below with reference to the accompanying drawings.

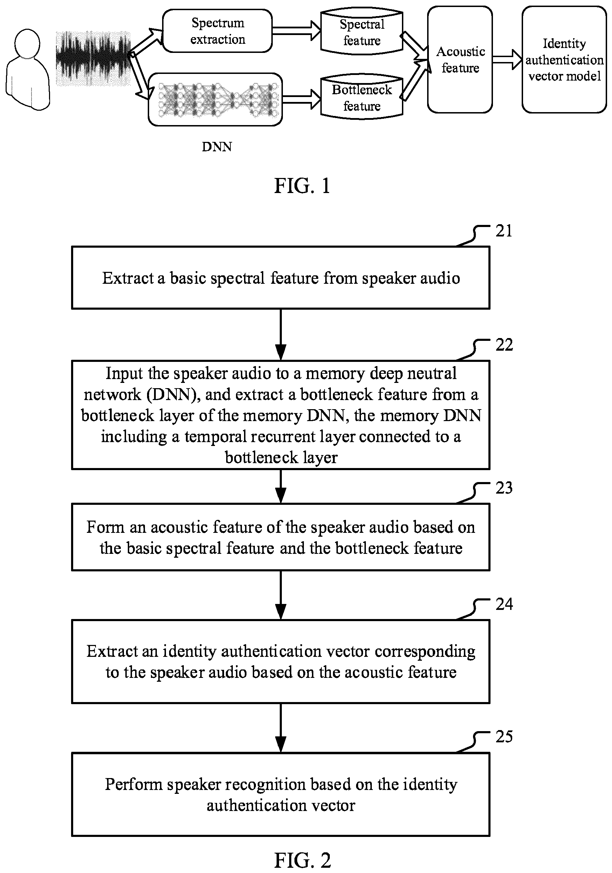

FIG. 1 is a schematic diagram illustrating an application scenario of an implementation disclosed in the present specification. First, a speaker speaks to form speaker audio. The speaker audio is input to a spectrum extraction unit, and the spectrum extraction unit extracts basic spectral features. In addition, the speaker audio is input to a deep neural network (DNN). In the implementation of FIG. 1, the deep neural network (DNN) is a neural network with a memory function and having a bottleneck layer. Accordingly, the features of the bottleneck layer are features with a memory effect. The bottleneck features are extracted from the bottleneck layer of the DNN with a memory function, and are then concatenated with the basic spectral features to form acoustic features. Then, the acoustic features are input to an identity authentication vector (i-vector) model, in which acoustic statistics are calculated based on the acoustic features, and i-vector extraction is performed based on the measured i-vector, and then speaker recognition is performed. As such, the result of the voiceprint recognition is output.

FIG. 2 is a flowchart illustrating a voiceprint recognition method, according to an implementation. The method process can be executed by any device, equipment or system with computing and processing capabilities. As shown in FIG. 2, the voiceprint recognition method of this implementation includes the following steps: Step 21, Extract a spectral feature from speaker audio; Step 22, Input the speaker audio to a memory deep neural network (DNN), and extract a bottleneck feature from a bottleneck layer of the memory DNN, the memory DNN including at least one temporal recurrent layer and the bottleneck layer, an output of the at least one temporal recurrent layer being connected to the bottleneck layer, and the number of dimensions of the bottleneck layer being less than the number of dimensions of any other hidden layer in the memory DNN; Step 23, Form an acoustic feature of the speaker audio based on the spectral feature and the bottleneck feature; Step 24, Extract an identity authentication vector corresponding to the speaker audio based on the acoustic feature; and Step 25, Perform speaker recognition based on the identity authentication vector. The following describes a specific execution process of each step.

First, at step 21, a spectral feature is extracted from the speaker audio. It can be understood that the speaker audio is formed when the speaker speaks and can be divided into a plurality of speech segments. The spectral feature extracted at step 21 is a basic spectral feature, in particular a (single-frame) short-term spectral feature.

In an implementation, the spectral feature is a Mel frequency cepstral coefficient (MFCC) feature. The Mel frequency is proposed based on human auditory features, and has a non-linear correspondence with Hertz (Hz) frequency. Extracting an MFCC feature from the speaker audio generally includes the following steps: pre-emphasis, framing, windowing, Fourier transform, Mel filter bank, discrete cosine transform (DCT), etc. Pre-emphasis is used to boost the high frequency part to a certain extent so that the frequency spectrum of the signal becomes flat. Framing is used to temporally divide the speech into a series of frames. Windowing is to use a windowing function to enhance continuity of the left end and right end of the frames. Next, Fourier transform is performed on the audio, so that a time domain signal is converted to a frequency domain signal. Then, the frequency of the frequency-domain signal is mapped to a Mel scale by using a Mel filter bank, so as to obtain a Mel spectrum. Then, the cepstrum coefficient of the Mel spectrum is obtained through discrete cosine transform, and then the Mel cepstrum can be obtained. Further, dynamic differential parameters can be extracted from standard cepstrum parameter MFCC, thereby obtaining differential features reflecting the dynamic variation features between frames. Therefore, in general, the first-order and second-order differential features of the MFCC are also obtained based on the extracted MFCC features. For example, if the Mel cepstrum feature is characterized by 20 dimensions, then a first order difference feature of 20 dimensions and a second order difference feature of 20 dimensions are also obtained in the difference parameter extraction phase, so as to form a 60-dimensional vector.

In another implementation, the basic spectral feature extracted at step 21 includes linear predictive coding (LPC) feature or perceptual linear predictive (PLP) feature. Such feature can be extracted by using a conventional method. It is also possible to extract other short-term spectral feature(s) as the basic feature.

However, the basic short-term spectral feature is often insufficient to express the full information of the speaker. For example, MFCC features do not well reflect speaker feature information in the high frequency domain. Thus, conventional technologies have complemented the overall acoustic features by introducing bottleneck features of the deep neural network (DNN).

Conventional deep neural network (DNN) is an extension of conventional feedforward artificial neural network, which has more hidden layers and a stronger expression capability, and has been applied in the field of speech recognition in recent years. In speech recognition, the deep neural network (DNN) replaces the GMM part in the Gaussian mixture model-hidden Markov model (GMM-HMM) acoustic model to represent the probability of different states that occur in the HMM model. Generally, for a DNN for speech recognition, the input is an acoustic feature that concatenates a plurality of earlier and later frames, and the output layer typically uses a softmax function to represent a posteriori probability for predicting a phoneme in an HMM state, so that phoneme states can be classified.

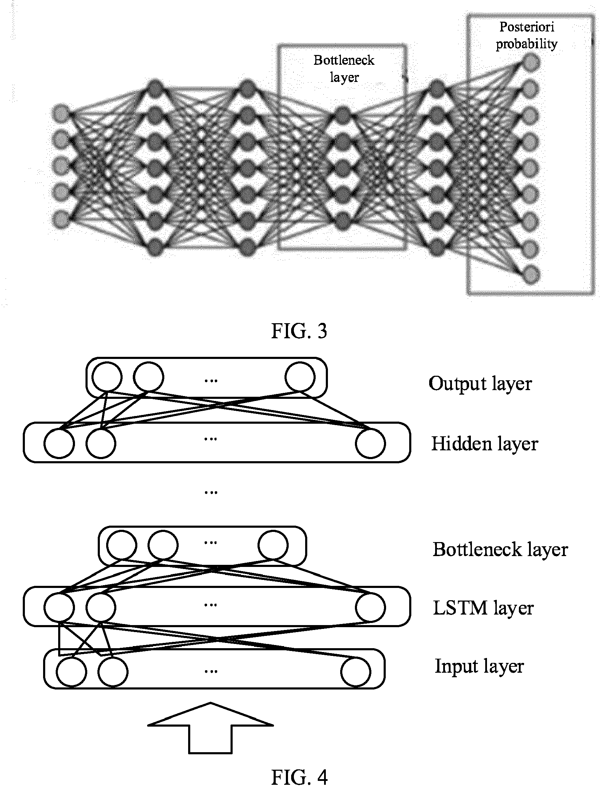

Deep neural network (DNN) has such a classification capability, because it obtains, based on supervised data, feature representations that are advantageous for a particular classification task. In a DNN including a bottleneck layer, the feature of the bottleneck layer is a good representation of the above feature. Specifically, the bottleneck layer is a hidden layer in the DNN model that includes a significantly reduced number of nodes (referred to as dimensions), compared to other hidden layers. Alternatively, the bottleneck layer includes fewer nodes than the other layers in the deep neural network (DNN). For example, in a deep neural network (DNN), the number of nodes at any other hidden layer is 1024, and the number of nodes at a certain layer is only 64, forming a DNN structure with a hidden layer topology of 1024-1024-64-1024-1024. The hidden layer in which the number of nodes is only 64 is referred to as a bottleneck layer. FIG. 3 is a schematic diagram illustrating a bottleneck layer of a deep neural network. As shown in FIG. 3, the deep neural network includes a plurality of hidden layers, and the hidden layer in which the number of nodes is significantly reduced compared to other hidden layers is the bottleneck layer.

The activation value of a node at the bottleneck layer can be considered as a low-dimensional representation of the input signal, which is also referred to as a bottleneck feature. In a DNN trained for speech recognition, the bottleneck feature can include additional speaker speech information.

In an implementation, to better reflect the context dependency of the sequence of speech frames with acoustic features and better grasp the timing variation of the speech prosody in the speaker's audio, an improvement is made based on a conventional deep neural network (DNN), that is, a memory function is introduced to form a deep neural network (DNN) with memory. Specifically, the deep neural network (DNN) with memory is designed to include at least one temporal recurrent layer and a bottleneck layer, and the output of the temporal recurrent layer is connected to the bottleneck layer, so that the feature(s) of the bottleneck layer can reflect temporal feature(s), thereby having a "memory" function. Then, at step 22, the speaker audio is input to the memory DNN, and the memory bottleneck feature is extracted from the bottleneck layer of the memory DNN.

In an implementation, the temporal recurrent layer described above employs a hidden layer in a recurrent neural network (RNN). More specifically, in an implementation, the temporal recurrent layer employs a Long-Short Term Memory (LSTM) model.

Recurrent neural network (RNN) is a temporal recurrent neural network that can be used to process sequence data. In the RNN, the current output of a sequence is associated with its previous output. Specifically, the RNN memorizes the previous information and applies it to the calculation of the current output; that is, the nodes between the hidden layers are connected, and the input of the hidden layer includes not only the output of the input layer, but also the output of the hidden layer from a previous time. That is, the $t^{th}$ state of the hidden layer can be expressed as:

$$St = f(U*Xt + W*St\text{-}1)$$

where Xt is the $t^{th}$ state of the input layer, St-1 is the $(t\text{-}1)^{th}$ state of the hidden layer, f is a calculation function, and W and U are weights. As such, the RNN loops the previous state back to the current input, thus taking into account the timing effect of the input sequence.

In the case of processing long-term memory, RNN has a long-term dependence issue, and training is difficult, for example, the issue of gradient overflow may easily occur. The LSTM model proposed based on the RNN further resolves the issue of long-term dependence.

According to the LSTM model, calculation of three gates (input gate, output gate, and forget gate) is implemented in recurrent network module(s). The forget gate can be arranged to filter information, to discard certain information that is no longer needed, so as to better analyze and process the long-term data by determining and screening unnecessary interference information from input.

FIG. 4 is a schematic structural diagram illustrating a memory DNN, according to an implementation. As shown in FIG. 4, the deep neural network (DNN) includes an input layer, an output layer, and a plurality of hidden layers. These hidden layers include a temporal recurrent layer formed based on the LSTM model. The output of the LSTM layer is connected to a bottleneck layer, and the bottleneck layer is followed by a conventional hidden layer. The bottleneck layer has a significantly reduced number of dimensions, for example, 64 or 128 dimensions. The number of dimensions of other hidden layers are, for example, 1024, 1500, etc., which is far greater than the number of dimensions of the bottleneck layer. The number of dimensions of the LSTM can be the same as or different from the number of dimensions of any other conventional hidden layer, but is also far greater than the number of dimensions of the bottleneck layer. In a typical example, the number of dimensions of each conventional hidden layer is 1024, the number of dimensions of the LSTM layer is 800, and the number of dimensions of the bottleneck layer is 64, thus forming a deep neural network (DNN) with a dimension topology of 1024-1024-800-64-1024-1024.

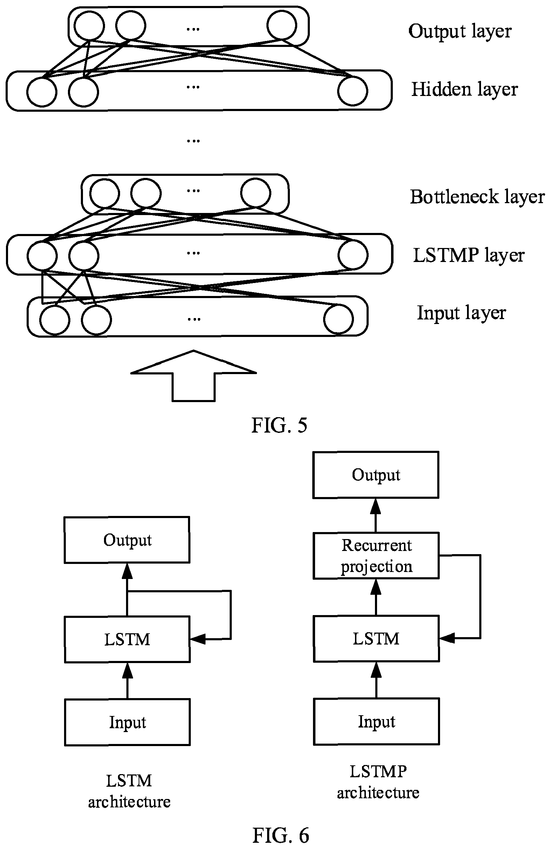

FIG. 5 is a schematic structural diagram illustrating a memory DNN, according to another implementation. As shown in FIG. 5, the deep neural network (DNN) includes an input layer, an output layer, and a plurality of hidden layers, where the hidden layers include an LSTM projection (LSTMP) layer as a temporal recurrent layer. The LSTMP layer is an LSTM architecture with a recurrent projection layer. FIG. 6 illustrates a comparison between an LSTM and an LSTMP. In a conventional LSTM architecture, the recurrent connection of the LSTM layer is implemented by the LSTM itself, that is, via direct connection from the output unit to the input unit. In the LSTMP architecture, a separate linear projection layer is added after the LSTM layer. As such, the recurrent connection is an input from the recurrent projection layer to the LSTM layer. By setting the number of units at the recurrent projection layer, projection-based dimension reduction can be performed on the number of nodes at the LSTM layer.

The output of the recurrent projection layer in the LSTMP layer is connected to the bottleneck layer, and the bottleneck layer is followed by a conventional hidden layer. Similarly, the bottleneck layer has a significantly reduced number of dimensions, and the other hidden layers, including the LSTMP layer, have a far greater number of dimensions. In a typical example, the number of dimensions of each conventional hidden layer is 1024, the number of dimensions of the LSTM layer is 800, and the number of dimensions of the recurrent projection layer on which projection-based dimension reduction is performed is 512, thus forming a depth neural network (DNN) with a dimension topology of 1024-800-512-64-1024-1024.

Although in the examples of FIG. 4 and FIG. 5, the input layer is directly connected to the LSTM/LSTMP temporal recurrent layer, it can be understood that other conventional hidden layers can also precede the temporal recurrent layer.

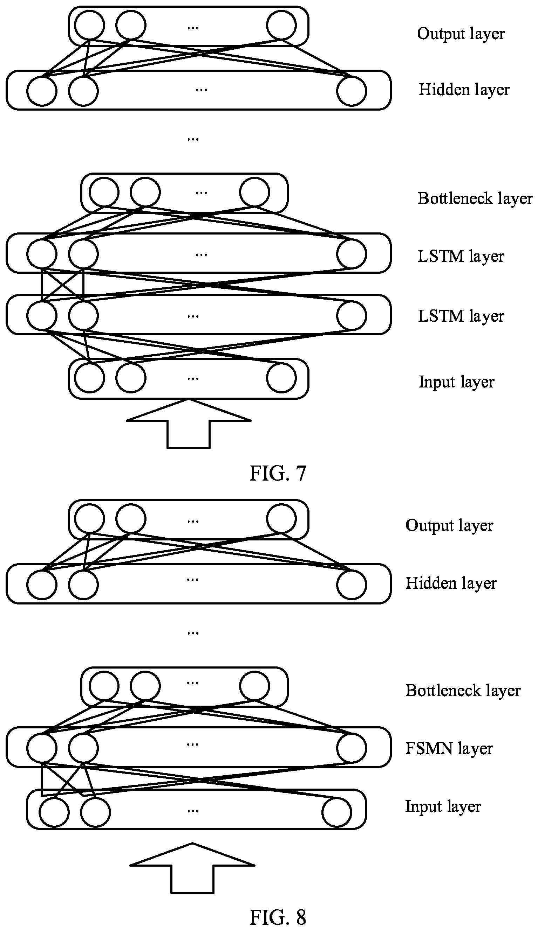

FIG. 7 is a schematic structural diagram illustrating a memory DNN, according to another implementation. As shown in FIG. 7, the deep neural network (DNN) includes an input layer, an output layer, and a plurality of hidden layers. These hidden layers include two LSTM layers, the output of the second LSTM layer is connected to the bottleneck layer, and the bottleneck layer is followed by a conventional hidden layer. Similarly, the bottleneck layer has a significantly reduced number of dimensions, and any other hidden layer (including the two LSTM layers) has a far greater number of dimensions. In a typical example, the number of dimensions of each conventional hidden layer is 1024, the number of dimensions of each of the two LSTM layers is 800, and the number of dimensions of the bottleneck layer is 64, thus forming a depth neural network (DNN) with a dimension topology of 1024-800-800-64-1024-1024.

In an implementation, the LSTM layer in FIG. 7 can be replaced with an LSTMP layer. In another implementation, more LSTM layers can be included in the DNN.

In an implementation, a temporal recurrent layer is formed in the deep neural network (DNN) by using a Feedforward Sequential Memory Networks (FSMN) model. In the FSMN model, some learning memory modules are added at the hidden layer of a standard feedforward fully connected neural network, and these memory modules use a tap delay line structure to encode long-term context information into a fixed-size expression as a short-term memory mechanism. Therefore, the FSMN models the long-term dependency in the time sequence signal without using a feedback connection. For speech recognition, the FSMN has solid performance, and its training process is simpler and more efficient.

A compact FSMN (compact FSMN) is also proposed based on the FSMN. The cFSMN has a more simplified model structure. In the cFSMN, first projection-based dimension reduction is performed on the input data (for example, the number of dimensions is reduced to 512) by a projection layer, then the data is processed by using a memory model, and finally the feature data (for example, 1024 dimensions) is output after processing by using the memory model.

The FSMN model or cFSMN model can be introduced in the deep neural network (DNN), so that the DNN has a memory function.

FIG. 8 is a schematic structural diagram illustrating a memory DNN, according to an implementation. As shown in FIG. 8, the deep neural network (DNN) includes an input layer, an output layer, and a plurality of hidden layers. These hidden layers include a temporal recurrent layer formed by the FSMN model. The output of the FSMN layer is connected to a bottleneck layer, and the bottleneck layer is followed by a conventional hidden layer. The bottleneck layer has a significantly reduced number of dimensions. The number of dimensions of any other hidden layer (including the FSMN layer) is greater than the number of dimensions of the bottleneck layer, for example, 1024 dimensions, 1500 dimensions, etc. In a typical example, the number of dimensions of the FSMN layer is 1024, the number of any other hidden layer is 2048, and the number of dimensions of the bottleneck layer dimension is 64, thus forming a deep neural network (DNN) with a dimension topology of 2048-1024-64-2048-2048.

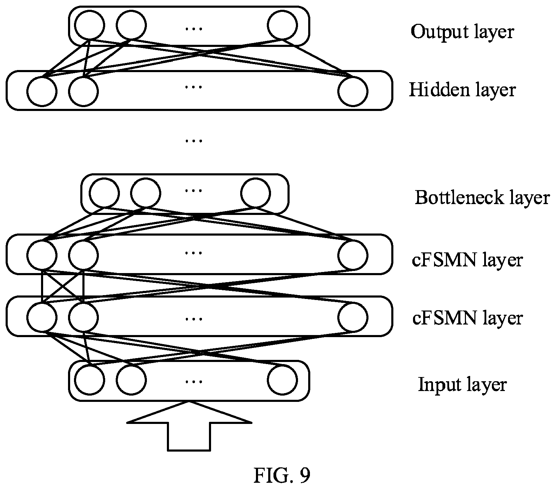

FIG. 9 is a schematic structural diagram illustrating a memory DNN, according to another implementation. As shown in FIG. 9, the deep neural network (DNN) includes an input layer, an output layer, and a plurality of hidden layers. These hidden layers include two cFSMN layers, the output of the second cFSMN layer is connected to the bottleneck layer, and the bottleneck is followed by a conventional hidden layer. Similarly, the bottleneck layer has a significantly reduced number of dimensions, and any other hidden layer (including the two cFSMN layers) has a far greater number of dimensions. In a typical example, the number of dimensions of each conventional hidden layer is 2048, the number of dimensions of each of the two cFSMN layers is 1024, and the number of dimensions of the bottleneck layer is 64, thus forming a depth neural network (DNN) with a dimension topology of 2048-1024-1024-64-2048-2048.

It can be understood that the cFSMN layer in FIG. 9 can be replaced with an FSMN layer. In another implementation, more FSMN/cFSMN layers can be included in the DNN.

In an implementation, other temporal recurrent models can be employed in the deep neural network (DNN) to form a DNN with a memory function. In general, the DNN with a memory function includes one or more temporal recurrent layers, and the temporal recurrent layer(s) is directly connected to a bottleneck layer, so that the features of the bottleneck layer can reflect the timing effect and have a memory effect. It can be understood that the greater the number of temporal recurrent layers, the better the performance, but the higher the network complexity; and the fewer the number of temporal recurrent layers, the simpler the training of the network model. Typically, a DNN with 1 to 5 temporal recurrent layers is often used.

As can be seen from the above description, a deep neural network (DNN) can be designed to have temporal recurrent layer(s) before a bottleneck layer. For such a deep neural network (DNN) with a memory function, speech recognition training can be performed in a conventional way. The bottleneck feature(s) included in the trained DNN can reflect more abundant speech information than the basic spectral feature(s). In addition, because the DNN includes temporal recurrent layer(s) before the bottleneck layer, the bottleneck feature(s) also has a memory function, which reflects the time sequence effect of speech. Correspondingly, at step 22 of FIG. 2, the feature(s) of the bottleneck layer in the deep neural network (DNN) with a memory function is extracted, so that the bottleneck feature(s) with a memory function is obtained.

Specifically, at step 22, the speaker audio is input to the memory DNN. In an implementation, a plurality of consecutive speech frames of the speaker audio are input to the DNN, where the plurality of consecutive speech frames include, for example, 16 frames: 10 preceding frames, 1 present frame, and 5 subsequent frames. For the plurality of consecutive speech frames, the basic spectral features are generally input to the memory DNN. In an implementation, the basic spectral feature input to the DNN is a Mel frequency cepstral coefficient (MFCC) feature. In another implementation, the basic spectral feature input to the DNN is an Mel scale filter bank (FBank) feature. The FBank feature is a spectral feature obtained by using a Mel filter bank map the frequency of a frequency domain signal to a Mel scale. In other words, the MFCC feature is obtained by performing discrete cosine transform on the FBank feature, and the FBank feature is a MFCC feature prior to the discrete cosine transform.

The basic spectral feature input to the memory DNN is processed through calculation by the DNN to form a series of bottleneck features at the bottleneck layer. Specifically, the bottleneck layer includes a plurality of nodes with a small number of dimensions, and these nodes are assigned activation values during the forward calculation when the spectral features are processed in the DNN. The bottleneck feature(s) is extracted by reading the activation values of the nodes at the bottleneck layer.

As such, at step 21, the basic spectral feature is extracted from the speaker audio; and at step 22, the bottleneck feature is extracted from the deep neural network (DNN) with a memory function. Based on this, at step 23, the spectral feature and the bottleneck feature are concatenated to form an acoustic feature of the speaker audio. In an implementation, the bottleneck feature and the basic spectral feature are concatenated to form the acoustic feature of the speaker audio.

For example, assuming that the basic spectral feature includes a 20-dimensional MFCC feature, a 20-dimensional MFCC first-order differential feature, and a 20-dimensional MFCC second-order differential feature, and that the number of dimensions of the bottleneck feature is the same as the number of dimensions of the bottleneck layer, for example, 64, then the 60-dimensional feature of the MFCC and its differential can be concatenated with the 64-dimensional bottleneck feature to form a 124-dimensional vector as the acoustic feature Ot. Of course, in other examples, the acoustic feature Ot can include more features obtained based on other factors.

Next, at step 24, the identity authentication vector corresponding to the speaker audio, that is, the i-vector, is extracted based on the acoustic feature.

The i-vector model is built based on the Gaussian mean supervector space in the Gaussian mixture model-universal background model (GMM-UBM), and considers that both the speaker information and the channel information are included in a low-dimensional subspace. Given a segment of speech, its Gaussian mean supervector M can be decomposed as follows:

$$M = m + T\omega$$

where m is a component independent of a speaker and a channel, which can be usually replaced with the mean supervector of the UBM; T is a total variability subspace matrix; and $\omega$ is a variation factor including the speaker and channel information, that is, i-vector.

To calculate and extract the i-vector, sufficient statistics (that is, Baum-Welch statistics) for each speech segment need to be calculated:

$$N_c^{(k)} = \sum_t \gamma_{c,t}^{(k)}$$

$$F_c^{(k)} = \sum_t \gamma_{c,t}^{(k)} o_t^{(k)}$$

$$S_c^{(k)} = \sum_t \gamma_{c,t}^{(k)} o_t^{(k)} o_t^{(k)T}$$

where $N_c^{(k)}$, $F_c^{(k)}$, and $S_c^{(k)}$ respectively denote the zero-order statistics, the first-order statistics and the second-order statistics of the speech segment k on the $c^{th}$ GMM mixed component, $o_t^{(k)}$ denotes the acoustic feature of the speech segment k at the time index t, $\mu_c$, is the mean value of the $c^{th}$ GMM mixed component, $\gamma_{c,t}^{(k)}$ denotes the posterior probability of the acoustic feature $o_t^{(k)}$ for the $c^{th}$ GMM mixed component. The i-vector is mapped and extracted based on the above sufficient statistics.

It can be seen that the extraction of the i-vector is based on the calculation of the above sufficient statistics, which is based on the acoustic feature $o_t^{(k)}$. According to steps 21-23 of FIG. 2, the acoustic feature $o_t^{(k)}$ includes not only the basic spectral information of the speaker's audio, but also the bottleneck feature of the deep neural network (DNN) with a memory function. As such, the acoustic feature $o_t^{(k)}$ can better reflect the prosodic information of the speech segments, and correspondingly, the i-vector extracted based on the acoustic feature $o_t^{(k)}$ can more fully reflect the speaker's speech traits.

Next, at step 25, speaker identification is performed based on the extracted identity authentication vector (i-vector). Specifically, the extracted i-vector can be input to a classification model as an identity feature for classification and speaker identification. The classification model is, for example, a probabilistic linear discriminant analysis (PLDA) model. The model is used to calculate a score of likelihood ratio between different i-vectors and make a decision based on the score. In another example, the classification model is, for example, a support vector machine (SVM) model. The model is a supervised classification algorithm, which achieves classification of i-vectors by finding a classification plane and separating data on both sides of the plane.

As can be seen from the above description, because the acoustic feature includes a memory bottleneck feature, the prosodic information of the speech segment is better reflected, and correspondingly, the i-vector extracted based on the acoustic feature more fully reflects the speaker's speech traits, and therefore, the speaker recognition performed based on such i-vectors has higher recognition accuracy.

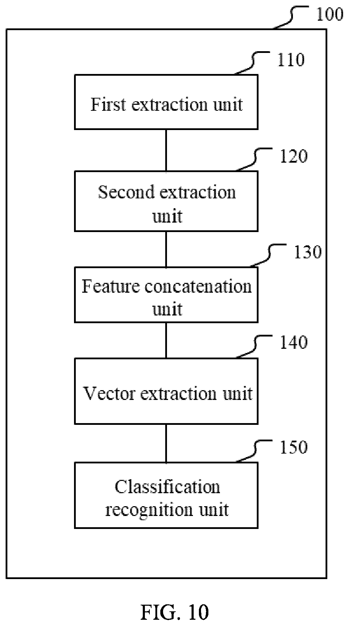

According to another aspect, an implementation of the present specification further provides a voiceprint recognition device. FIG. 10 is a schematic block diagram illustrating a voiceprint recognition device, according to an implementation. As shown in FIG. 10, the device 100 includes: a first extraction unit 110, configured to extract a first spectral feature from speaker audio; a second extraction unit 120, configured to: input the speaker audio to a memory deep neural network (DNN), and extract a bottleneck feature from a bottleneck layer of the memory DNN, the memory DNN including at least one temporal recurrent layer and the bottleneck layer, an output of the at least one temporal recurrent layer being connected to the bottleneck layer, and the number of dimensions of the bottleneck layer being less than the number of dimensions of any other hidden layer in the memory DNN; a feature concatenation unit 130, configured to form an acoustic feature of the speaker audio based on the first spectral feature and the bottleneck feature; a vector extraction unit 140, configured to extract an identity authentication vector corresponding to the speaker audio based on the acoustic feature; and a classification recognition unit 150, configured to perform speaker recognition by using a classification model and based on the identity authentication vector.

According to an implementation, the first spectral feature extracted by the first extraction unit 110 includes a Mel frequency cepstral coefficient (MFCC) feature, and a first order difference feature and a second order difference feature of the MFCC feature.

In an implementation, the temporal recurrent layer in the memory DNN on which the second extraction unit 120 is based includes a hidden layer based on a long-short term memory (LSTM) model, or a hidden layer based on an LSTMP model, where the LSTMP model is an LSTM model with a recurrent projection layer.

In another implementation, the temporal recurrent layer can further include a hidden layer based on a feedforward sequence memory FSMN model, or a hidden layer based on a cFSMN model, the cFSMN model being a compact FSMN model.

In an implementation, the second extraction unit 120 is configured to: extract a second spectral feature from a plurality of consecutive speech frames of the speaker audio, and input the second spectral feature to the deep neural network (DNN).

Further, in an example, the second spectral feature is a Mel scale filter bank (FBank) feature.

In an implementation, the feature concatenation unit 130 is configured to concatenate the first spectral feature and the bottleneck feature to form the acoustic feature.

According to the method and device provided in the present specification, a deep neural network (DNN) with a memory function is designed, and a bottleneck feature with a memory effect is extracted from a bottleneck layer of such a deep neural network and included in the acoustic features. Such acoustic features better reflect timing-dependent prosodic features of the speaker. The identity authentication vector (i-vector) extracted based on such acoustic features can better represent the speaker's speech traits, in particular prosodic features, so that the accuracy of speaker recognition is improved.

According to an implementation of another aspect, a computer readable storage medium is further provided, where the computer readable storage medium stores a computer program, and when the computer program is executed in a computer, the computer is enabled to perform the method described with reference to FIG. 2.

According to an implementation of yet another aspect, a computing device is further provided, including a memory and a processor, where the memory stores executable code, and when the processor executes the executable code, the method described with reference to FIG. 2 is implemented.

A person skilled in the field should be aware that, in one or more of the above examples, the functions described in the present invention can be implemented in hardware, software, firmware, or any combination thereof. When these functions are implemented by software, they can be stored in a computer readable medium or transmitted as one or more instructions or code lines on the computer readable medium.

The specific implementations mentioned above further describe the object, technical solutions and beneficial effects of the present invention. It should be understood that the above descriptions are merely specific implementations of the present invention and are not intended to limit the protection scope of the present invention.

**Claims**

1. A voiceprint recognition method, comprising:

   extracting (21) a first spectral feature from speaker audio;
   inputting (22) the speaker audio to a memory deep neural network, DNN, and extracting a bottleneck feature from a bottleneck layer of the memory DNN, the memory DNN including at least one temporal recurrent layer and the bottleneck layer, an output of the at least one temporal recurrent layer being connected to the bottleneck layer, and the number of dimensions of the bottleneck layer being less than the number of dimensions of any other hidden layer in the memory DNN;
forming (23) an acoustic feature of the speaker audio based on the first spectral feature and the bottleneck feature;
extracting (24) an identity authentication vector corresponding to the speaker audio based on the acoustic feature; and
performing (25) speaker recognition by using a classification model and based on the identity authentication vector,
wherein the at least one temporal recurrent layer comprises a hidden layer based on a feedforward sequence memory, FSMN, model, or a hidden layer based on a cFSMN model, the cFSMN model being a compact FSMN model.

2. The method according to claim 1, wherein the first spectral feature comprises a Mel frequency cepstral coefficient, MFCC, feature, and a first order difference feature and a second order difference feature of the MFCC feature.

3. The method according to claim 1, wherein inputting (22) the speaker audio to a memory deep neural network, DNN, comprises: extracting a second spectral feature from a plurality of consecutive speech frames of the speaker audio, and inputting the second spectral feature to the memory DNN.

4. The method according to claim 3, wherein the second spectral feature is a Mel scale filter bank, FBank, feature.

5. The method according to claim 1, wherein the forming (23) an acoustic feature of the speaker audio comprises: concatenating the first spectral feature and the bottleneck feature to form the acoustic feature.

6. A computer readable storage medium, wherein the medium stores a computer program, and when the computer program is executed on a computer, the computer is enabled to perform a method according to any one of claims 1 to 5.

7. A computing device, comprising a memory and a processor, wherein the memory stores executable code, and when the processor executes the executable code, a method according to any one of claims 1 to 5 is implemented.

**Patentansprüche**

1. Stimmenausdruck-Erkennungsverfahren, das Folgendes umfasst:

Extrahieren (21) eines ersten Spektralmerkmals aus Sprecheraudio;
Eingeben (22) des Sprecheraudios in ein tiefes neuronales Speichernetz, Speicher-DNN, und Extrahieren eines Engpassmerkmals aus einer Engpassschicht des Speicher-DNN, wobei das Speicher-DNN wenigstens eine zeitlich wiederkehrende Schicht und die Engpassschicht umfasst, wobei eine Ausgabe der wenigstens einen zeitlich wiederkehrenden Schicht mit der Engpassschicht verbunden ist und die Anzahl von Dimensionen der Engpassschicht kleiner als die Anzahl von Dimensionen einer beliebigen anderen verborgenen Schicht in dem Speicher-DNN ist;
Bilden (23) eines akustischen Merkmals des Sprecheraudios basierend auf dem ersten Spektralmerkmal und dem Engpassmerkmal;
Extrahieren (24) eines Identitätsauthentifizierungsvektors, der dem Sprecheraudio entspricht, basierend auf dem akustischen Merkmal; und
Durchführen (25) von Sprechererkennung unter Verwendung eines Klassifizierungsmodells und basierend auf dem Identitätsauthentifizierungsvektor,
wobei die wenigstens eine zeitlich wiederkehrende Schicht eine verborgene Schicht basierend auf einem Vorwärtssequenz-Speichermodell (FSMN-Modell) oder eine verborgene Schicht basierend auf einem cFSMN-Modell umfasst, wobei das cFSMN-Modell ein kompaktes FSMN-Modell ist.

2. Verfahren nach Anspruch 1, wobei das erste Spektralmerkmal ein Mel-Frequenz-Cepstral-Koeffizienten-Merkmal (MFCC-Merkmal) und ein Differenzmerkmal erster Ordnung und ein Differenzmerkmal zweiter Ordnung des MFCC-Merkmals umfasst.

3. Verfahren nach Anspruch 1, wobei das Eingeben (22) des Sprecheraudios in ein tiefes neuronales Speichernetz, Speicher-DNN, Folgendes umfasst: Extrahieren eines zweiten Spektralmerkmals aus mehreren aufeinanderfolgenden Sprachrahmen des Sprecheraudios und Eingeben des zweiten Spektralmerkmals in das Speicher-DNN.

4. Verfahren nach Anspruch 3, wobei das zweite Spektralmerkmal ein Mel-Skala-Filterbank-Merkmal (FBANK-Merkmal) ist.

**5.** Verfahren nach Anspruch 1, wobei das Bilden (23) eines akustischen Merkmals des Sprecheraudios Folgendes umfasst: Verketten des ersten Spektralmerkmals und des Engpassmerkmals, um das akustische Merkmal zu bilden.

**6.** Computerlesbares Speichermedium, wobei das Medium ein Computerprogramm speichert und, wenn das Computerprogramm auf einem Computer ausgeführt wird, der Computer in die Lage versetzt wird, ein Verfahren nach einem der Ansprüche 1 bis 5 durchzuführen.

**7.** Rechenvorrichtung, die einen Speicher und einen Prozessor umfasst, wobei der Speicher ausführbaren Code speichert und, wenn der Prozessor den ausführbaren Code ausführt, ein Verfahren nach einem der Ansprüche 1 bis 5 implementiert wird.

**Revendications**

**1.** Procédé de reconnaissance d'empreinte vocale, comprenant :

l'extraction (21) d'une première caractéristique spectrale à partir d'un audio de locuteur ;
l'entrée (22) de l'audio de locuteur dans un réseau neuronal profond, DNN, de mémoire et l'extraction d'une caractéristique de goulot d'étranglement à partir d'une couche de goulot d'étranglement du DNN de mémoire, le DNN de mémoire comprenant au moins une couche récurrente temporelle et la couche de goulot d'étranglement, une sortie de l'au moins une couche récurrente temporelle étant connectée à la couche de goulot d'étranglement, et le nombre de dimensions de la couche de goulot d'étranglement étant inférieur au nombre de dimensions de toute autre couche cachée dans le DNN de mémoire ;
la formation (23) d'une caractéristique acoustique de l'audio de locuteur sur la base de la première caractéristique spectrale et de la caractéristique de goulot d'étranglement ;
l'extraction (24) d'un vecteur d'authentification d'identité correspondant à l'audio de locuteur sur la base de la caractéristique acoustique ; et
la réalisation (25) d'une reconnaissance de locuteur en utilisant un modèle de classification et sur la base du vecteur d'authentification d'identité,
dans lequel l'au moins une couche récurrente temporelle comprend une couche cachée basée sur un modèle de mémoire de séquence prédictive, FSMN, ou une couche cachée basée sur un modèle cFSMN, le modèle cFSMN étant un modèle FSMN compact.

**2.** Procédé selon la revendication 1, dans lequel la première caractéristique spectrale comprend une caractéristique de coefficient cepstral de fréquence Mel, MFCC, et une caractéristique de différence de premier ordre et une caractéristique de différence de second ordre de la caractéristique MFCC.

**3.** Procédé selon la revendication 1, dans lequel l'entrée (22) de l'audio de locuteur dans un réseau neuronal profond, DNN, de mémoire comprend : l'extraction d'une seconde caractéristique spectrale à partir d'une pluralité de trames vocales consécutives de l'audio de locuteur, et l'entrée de la seconde caractéristique spectrale dans le DNN de mémoire.

**4.** Procédé selon la revendication 3, dans lequel la seconde caractéristique spectrale est une caractéristique de banque de filtres d'échelle Mel, FBANK.

**5.** Procédé selon la revendication 1, dans lequel la formation (23) d'une caractéristique acoustique de l'audio de locuteur comprend : la concaténation de la première caractéristique spectrale et de la caractéristique de goulot d'étranglement pour former la caractéristique acoustique.

**6.** Support de stockage lisible par ordinateur, dans lequel le support stocke un programme informatique, et lorsque le programme informatique est exécuté sur un ordinateur, l'ordinateur est activé pour réaliser un procédé selon l'une quelconque des revendications 1 à 5.

**7.** Dispositif informatique, comprenant une mémoire et un processeur, dans lequel la mémoire stocke un code exécutable, et lorsque le processeur exécute le code exécutable, un procédé selon l'une quelconque des revendications 1 à 5 est mis en oeuvre.

FIG. 1

Extract a basic spectral feature from speaker audio — 21

Input the speaker audio to a memory deep neutral network (DNN), and extract a bottleneck feature from a bottleneck layer of the memory DNN, the memory DNN including a temporal recurrent layer connected to a bottleneck layer — 22

Form an acoustic feature of the speaker audio based on the basic spectral feature and the bottleneck feature — 23

Extract an identity authentication vector corresponding to the speaker audio based on the acoustic feature — 24

Perform speaker recognition based on the identity authentication vector — 25

FIG. 2

FIG. 3

Output layer

Hidden layer

...

Bottleneck layer

LSTM layer

Input layer

FIG. 4

FIG. 5

LSTM
architecture

LSTMP
architecture

FIG. 6

Output layer

Hidden layer

Bottleneck layer

LSTM layer

LSTM layer

Input layer

FIG. 7

Output layer

Hidden layer

Bottleneck layer

FSMN layer

Input layer

FIG. 8

Output layer

Hidden layer

Bottleneck layer

cFSMN layer

cFSMN layer

Input layer

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170358306 A1

**Non-patent literature cited in the description**

- **SINA HAMIDI GHALEHJEGH.** Deep bottleneck features for i-vector based text-independent speaker verification. *IEEE Workshop on Automatic Speech Recognition and Understanding,* 2015